# EUROPEAN PATENT SPECIFICATION

(11) **EP 4 045 297 B1**
(45) Date of publication and mention of the grant of the patent: **09.08.2023**
(21) Application number: 20799847.7
(22) Date of filing: 08.10.2020
(51) Int. Cl.: B29D 30/00, B29C 31/04, B26D 1/24, B26D 5/00, B29B 7/60, B29B 7/72, B29B 7/74, B29C 48/285, B29C 48/68, B29C 48/92

(54) **FEEDING DEVICE AND METHOD FOR FEEDING A CONTINUOUS ELONGATED ELEMENT**
ZUFÜHRVORRICHTUNG UND VERFAHREN ZUM ZUFÜHREN EINES KONTINUIERLICHEN LÄNGLICHEN ELEMENTS
DISPOSITIF D'ALIMENTATION ET PROCÉDÉ D'ALIMENTATION D'UN ÉLÉMENT ALLONGÉ CONTINU

(30) Priority: 16.10.2019 IT 201900019046
(43) Date of publication of application: 24.08.2022
(73) Proprietor: Pirelli Tyre S.p.A., 20126 Milano (IT)
(72) Inventor: MONTEROSSO, Antonio, 20126 Milano (IT)
(74) Representative: Tirloni, Bartolomeo
(86) International application number: PCT/IT2020/050251
(87) International publication number: WO 2021/074941

(56) References cited:
- WO-A2-2012/164424
- US-A- 3 768 712

## Description

### Technical field of the invention

The present invention relates to a feeding device and to a method for feeding a continuous elongated element, in particular for the production of tyres.

### State of the art

In the context of the tyre production processes, it is common processing or manipulating continuous elongated elements (for example ribbon-like elements), typically entirely of elastomeric compound or containing elastomeric compound in combination with other elements.

By the term "feeding" it is meant the transport of the elongated element through a feeding point for the purpose of any type of treatment (e.g. mixing, extrusion, cutting, spreading or winding, coupling with other elements, calendering, etc.).

By "continuous elongated element" it is meant a structurally cohesive element, having a longitudinal dimension (which defines a length) much greater than the remaining dimensions (which define a width and a thickness), and having a section perpendicular to the longitudinal dimension of any shape (e.g. rectangular, circular, oval, irregular, etc.).

For example, it is known feeding a continuous elongated element to continuous processing machinery for processing in continuous the material. The feeding of the continuous elongated element to the machinery can take place in combination or not with the feeding of other ingredients.

For the purposes of the present description and/or of the claims that follow, the expression "continuous processing machinery" indicates a machinery into which the material to be processed (e.g. the continuous elongated element and/or the ingredients of the compound) for obtaining a desired product is fed in continuous (apart from the possible stop of the machinery due to maintenance, or variation of the recipe of the desired product) and from which the product is discharged by a substantially continuous flow.

The continuous processing machinery comprises the continuous mixers for the production of compounds (e.g. masterbatch, intermediate or final compounds), such as for example two screw mixers (i.e. twin screw), typically co-rotating, ring extruders (i.e. mixers having a plurality of co-rotating screws arranged in an annular arrangement), planetary extruders (i.e. mixers having a rotating central spindle and a plurality of planetary spindles arranged around, and intermeshed with, the central spindle to rotate around the central spindle and on themselves following the rotation of the central spindle). These mixers are capable of imparting an energetic mixing to the materials introduced therewith, both in the state of individual ingredients (separated or combined), and in the state of compound, even cold, and the active elements of the mixers (e.g. screws and/or spindles) are characterized along their longitudinal development by transport portions (e.g. helical threads), to advance the material, interspersed with mixing portions (for example compressive masticating elements and shear masticating elements).

The continuous processing machinery also comprises the extruders for the production of semi-finished green products (e.g. tread band, beads, etc.) used in the production of tyres, such as single-screw extruders and twin-screw extruders (typically counter-rotating), extruders for semi-finished products (e.g. profilometer), feeding extruders for fabric gumming calenders. These extruders, while inevitably imparting a low degree of mixing, essentially perform the function of pushing the compound towards the outlet mouth. They are indeed typically not able to produce a compound starting from the individual ingredients.

The continuous elongated element can be directly fed to a feeding portion of a continuous processing machinery, wherein this feeding portion typically comprises at least one feeding screw, which captures and drags the continuous elongated element to a mixing and/or transporting chamber of the processing machinery. Typically, the continuous elongated element is fed to the feeding screw of the aforementioned machinery simply by gravity, for example through a hopper.

By 'substantially perpendicular' with respect to geometric elements (such as straight lines, planes, surfaces, etc.) it is meant that these elements (or elements parallel thereto and incident to each other) form an angle comprised between 90°-15° and 90°+15°, preferably comprised between 90°-10° and 90°+10°, ends included.

By 'substantially parallel' with respect to the aforementioned geometric elements it is meant that these elements (or elements parallel thereto and incident to each other) form an angle comprised between 0°-15° and 0°+15°, preferably comprised between 0°-10° and 0°+10°, ends included.

The terms 'optical', 'bright' and the like refer to an electromagnetic radiation that does not necessarily fall strictly within the optical band (i.e. the 400-700 nm band), but more generally falls within a wider neighbourhood of the optical band, for example from the ultraviolet to the infrared (for example the wavelength of the light radiation can be comprised between about 100 nm and about 10 µm).

By "matrix camera" it is meant a camera whose sensor has the pixels arranged according to a rectangular matrix having the two dimensions of comparable length (for example the two dimensions differ by less than one order of magnitude, as in the 16x9, 4x3 or 3x2 formats). By extension, a "matrix image" is a digital image acquired by a matrix camera.

By "optical axis" of a lens it is meant the line along which a rotation symmetry of the lens exists.

By "linear laser source" it is meant a laser source capable of emitting a linear laser beam, namely a laser beam lying in a "propagation plane" and having as direction of propagation a "propagation axis", belonging to the propagation plane and passing through the laser source. An intersection of the linear laser beam with a physical surface with reflective/diffusive properties, such as the surface of the elongated element, generates a 'laser line'.

The terms "radial" and "axial" are used with reference to respectively a direction perpendicular to the axis of rotation of a respective roller and to a direction parallel to the axis of rotation of the respective roller. The terms "circumferential" and the like are used with reference to an annular development centred on, and on a plane perpendicular to, the axis of rotation of the respective roller.

Document US4718770 discloses a screw extruder comprising a feed section with a feed roller running adjacent and counter the rotation of the screw.

Document JP2008126541A discloses an input method of a strip shaped elastomer into an extruder having a screw and a feed roll arranged parallel to the screw and rotating in an opposite direction with respect to the rotation of the screw.

Document WO 2012/164424 A2 discloses an apparatus for producing elastomeric compounds.

### Summary of the invention

Typically, the feeding screw of a continuous processing machinery is connected to, or coincides with, at least one processing screw of the machinery. For example, in a planetary extruder the feeding screw can coincide with an initial portion of the central spindle without satellites, or in a single screw extruder the feeding screw can coincide with an initial portion of the transporting and pushing screw itself. It follows that the rotation speed of the feeding screw is typically determined by the adjustment of the rotation speed of the processing screws for process reasons (e.g. adjusting the degree of mixing or adjusting the extrusion).

The Applicant has observed that typically during the feeding of a continuous elongated element to the feeding portion of a continuous processing machinery, since the elongated element is captured and dragged by the feeding screw, the flow rate of the elongated element actually fed is dependent on the rotation speed of the feeding screw. For example, as the rotation speed of the feeding screw increases, an increase in the actual feeding flow rate typically results, since the feeding screw tends to drag a greater amount of elongated element into the machinery (and vice versa).

Therefore, the Applicant has observed that when the rotation speed of the processing screw(s) varies for process reasons, an undesired variation in the feeding flow rate can occur.

The possible presence of a feeding roller adjacent to the feeding screw, as described in US4718770 and JP2008126541A, can increase this undesired dragging, since the feeding roller cooperates with the feeding screw of the extruder to precisely drag the elastomeric ribbon-like material into the mixing chamber of the extruder itself.

The Applicant has therefore felt the need to be able to mutually decouple the rotation of the processing screw (and therefore of the feeding screw) and the flow rate of the continuous elongated element actually fed, in order to improve and/or diversify the processes of production of compounds and/or of making of semi-finished products. For example, the Applicant has realized that it is advantageous to be able to adjust the rotation speed of the feeding screw while keeping unchanged the flow rate of the elongated element actually fed. In particular, given a certain feeding flow rate of the elongated element, in some phases of a continuous processing process, for example of mixing process, it could be useful to increase the rotation speed of the feeding screw in order to enhance mixing, without however increasing at the same time the fed flow rate (since in this case an increase in the degree of mixing would not be obtained, as there would be more material of the elongated element to be mixed, with a consequent balancing of the two effects).

Furthermore, the Applicant has noted that, in the aforementioned circumstances, any dosage performed on the continuous elongated element upstream of the continuous processing machinery could be compromised and/or distorted by the dragging effect of the feeding screw.

The Applicant has also observed that, in certain circumstances, the feeding screw of the machinery does not efficiently capture the continuous elongated element for dragging it into the mixing chamber of the machinery. For example, when the continuous elongated element has a width (and/or a thickness) that is high compared to the pitch of the feeding screw, the capture of the elongated element by the feeding screw can be difficult. This can cause an accumulation of the material constituting the elongated element at the feeding portion of the machinery, further hindering the operations of the feeding screw and leading to slowdowns, regurgitation of material, clogging of the feeding portion, etc., with consequent problems in terms of operation and/or production capacity and/or production quality of the plant, as well as possible downtimes due to maintenance operations.

Furthermore, the capture degree can vary uncontrollably as a function of process parameters, such as the physical parameters of the compound (e.g. viscosity, stickiness, etc.), the feeding speed and/or the feeding flow rate of the elongated element, the rotation speed of the feeding screw, etc.

Ultimately, these phenomena relating to capture can constitute factors that influence in a poor controllable and/or predictable way the flow rate of the continuous elongated element actually fed to the mixing chamber.

The Applicant has therefore faced the problem of feeding a continuous elongated element to a continuous processing machinery in a controlled way and independently both from the type and/or from the parameters, and/or from the conditions of process (e.g. time trend of the process phases, rotation speed of the active elements, e.g. transporting and/or mixing screws, feeding of other ingredients, etc.) and from the dimensions of the continuous elongated element and/or from the variability of such dimensions.

According to the Applicant, the aforesaid problem is solved by a feeding device of a continuous elongated element, wherein the device comprises a pair of rollers mutually arranged and suitably shaped for advancing along an advancement direction, and at the same time cutting along the advancement direction, the continuous elongated element as a consequence of their rotation, and wherein the rollers are rotated by, and solely by effect of, a motor and a transmission.

According to an aspect, the invention relates to a feeding device of a continuous elongated element according to claim 1.

By the expression "action not generated by the motor" it is meant an action generated by any component extraneous to the motor and/or to the feeding device, such as for example, and typically, an action (which generates a mechanical torque) exerted on the rollers from the continuous elongated element when pulled by the continuous processing machinery, for example by the feeding screw.

According to an aspect the invention relates to a plant, preferably for the production of tyres, comprising the feeding device according to the present invention and a continuous processing machinery comprising a feeding screw having a respective axis of rotation, wherein said feeding device is placed in proximity of said feeding screw. Preferably said continuous processing machinery is one of the following: planetary extruder, twin-screw mixer, ring extruder, single-screw extruder, twin-screw extruder, feeding extruder for fabric rubberizing calenders, extruder for semi-finished products

According to an aspect, the invention relates to a method for feeding a continuous elongated element according to claim 14.

By the expression "controlling a rotation speed" it is meant imparting a real rotation speed of the rollers substantially equal to a desired value (e.g. given by the motor as a function of the specific implemented process), and it includes the function of limiting or preventing a variation of the rotation speed of the rollers as a consequence of an action exerted on at least one of the rollers by said continuous elongated element, i.e. not generated by the motor.

According to an aspect the invention relates to a tyre production process comprising the method for feeding a continuous elongated element according to the present invention.

According to the Applicant, the side-by-side arrangement of the first and of the second roller, having respective axes of rotation arranged parallel to each other, allows the interposition of the continuous elongated element between the side surfaces of the two rollers and the interaction of the elongated element with the pluralities of reliefs.

The intermeshed arrangement of the plurality of radial reliefs achieves an interpenetration of the side surfaces of the first and of the second roller which allows, thanks to the mechanical interaction that ensues during the rotation of the two rollers, capturing and clamping the elongated element for advancing it.

The mutual close proximity of adjacent reliefs along the axial direction in turn creates, at mutually facing faces of each pair of reliefs belonging to different rollers, a series of close surfaces that cut the elongated element by reciprocal sliding as a consequence of the rotation of the rollers (e.g. making a plurality of scissor cutting elements).

The mutual close proximity of adjacent reliefs at the same time avoids the presence of a large space between the pairs of reliefs that can tear and/or not correctly cut the elongated element, for avoiding possible problems in terms of cloggings and/or malfunctions of the feeding device (e.g. the elongated element could accumulate at the rollers and therefore not be advanced by the rollers and/or it could be fed incorrectly cut to the processing machinery).

The arrangement in succession along the axial direction of the pluralities of reliefs and the closed circumferential development of the reliefs themselves allow the elongated element to be cut into strips of predefined maximum width (typically lower than the pitch of the feeding screw) and parallelly to the advancement direction.

The Applicant has verified that the cutting operation facilitates the capture of the elongated element by the feeding screw since it is possible with this operation to reduce the elongated element to a plurality of strips which, individually, have lower dimensions and/or lower mass and/or which are more easily processable than the whole elongated element. For example, thanks to the predefined maximum width of the strips and the direction in which they are cut, it is possible to converge and/or direct the cut strips in an optimal way with respect to the pitch of the feeding screw itself. Furthermore, the obtained strips can be spatially scattered, thus increasing the overall probability of capture by the feeding screw.

In this way it is achieved a feeding of the elongated element which is independent from the dimensions of the elongated element, and/or from their variability, and therefore a feeding free from problems related to possible extended dimensions of the elongated element (e.g. high width and/or thickness), such as an inefficient capture by the feeding screw and/or an accumulation of material at the feeding portion.

The cutting operation also allows to be able to decouple the degree of capture of the elongated element by the feeding screw from the process parameters, since possible negative and uncontrollable effects due to these process parameters (and/or to their variations), and which affect the degree of capture, can be attenuated thanks to the reduced and constant dimensions of the cut strips.

The motor and the transmission capable of limiting or preventing a variation of the respective rotation speed of the rollers as a consequence of an action exerted on at least one of the rollers not generated by the motor, prevent a possible dragging of the elongated element by an element extraneous to the feeding device (e.g. a feeding screw of a continuous processing machinery).

It is also believed that the cutting operation of the elongated element performed by the feeding device contributes, in synergy with the motor and the transmission, to further hinder the aforementioned dragging phenomenon of the elongated element.

In fact, when, for example, the feeding screw pulls the continuous elongated element with a speed greater than the feeding speed given by the rotation of the rollers, on the one hand the motor and the transmission brake or prevent the dragging of at least one of the two rollers by of the elongated element, and on the other hand the structural continuity of the elongated element before the cut prevents the elongated element from slipping between the two rollers (the advancement of the elongated element is in fact subordinated to the cutting operation which in turn strictly depends on the rotation speed of the rollers imposed by the motor and the transmission), precluding, in both cases, the consequent excessive sliding of the elongated element.

In this way it is possible to feed the elongated element only as a consequence of the rotation impressed on the rollers by the motor and by the transmission and therefore independent from the type and/or from parameters and/or conditions of process.

The combination of the aforementioned features thus allows, ultimately, to be able to effectively control the feeding of the elongated element.

The present invention in one or more of the above aspects may have one or more of the following preferred features.

Preferably it is provided providing the feeding device according to the present invention.

Preferably rotating said first and second roller, and more preferably also controlling said respective rotation speed, is performed by said motor and transmission.

Preferably said pluralities of reliefs of said first and second roller are mutually intermeshed so that, at each relief, said side surfaces of said first and second roller are at a minimum radial distance. In this way a succession of free spaces is created between each relief of each roller and the side surface (interposed between consecutive reliefs) of the opposite roller, thus facilitating the passage of the elongated element during cutting. Typically, the minimum radial distance is dimensioned according to a maximum thickness of the elongated element to be fed.

In one embodiment said minimum radial distance is greater than or equal to 10 mm, more preferably greater than or equal to 30 mm, and/or less than or equal to 120 mm, more preferably less than or equal to 110 mm. In this way it is possible to feed elongated elements having a wide range of thicknesses, while reducing the risk of clogging of the feeding device.

Preferably said axes of rotation of said first and second roller are arranged at a fixed mutual distance (to make the device structurally simple).

In one alternative embodiment, at least said first roller can move with respect to said second roller along a respective displacement direction for varying a mutual distance between said axes of rotation. In this case, preferably the feeding device comprises a moving actuator for moving said first roller with respect to said second roller along said displacement direction and a locking device for locking said first roller in a given position along said displacement direction. In this way it is possible to vary the radial distance between the side surfaces of the rollers to expand the range of thicknesses of elongated elements that can be fed.

Preferably said displacement direction is substantially perpendicular to both said axes of rotation of said first and second roller. In this way the first roller is moved in a rational way.

Preferably each relief has an axial width constant moving along a radial direction (in other words, the reliefs do not taper or widen proceeding along their radial development).

Preferably said reliefs of said pluralities of reliefs have respective axial widths equal to each other.

Preferably said reliefs of said pluralities of reliefs have respective (maximum and/or minimum) radial heights equal to each other.

Preferably said reliefs of each plurality of reliefs are equally spaced to each other along said substantially axial direction.

Preferably an axial width of each relief is equal to an axial distance between subsequent reliefs along the respective succession.

The constructive features described in the previous five paragraphs give structural regularity to the pluralities of reliefs to improve the intermeshed arrangement of the pluralities of reliefs and the mutual close proximity of adjacent reliefs to achieve a regular cut and/or advancement of the elongated element.

Preferably said first and second roller have a same axial extension. In this way they are rationally dimensioned.

Preferably each plurality of reliefs is, more preferably equally, distributed along a whole axial extension of the respective roller. In this way the whole side surface of the rollers is shaped to be able to advance and cut elongated elements having different widths (at most up to the axial extension of the rollers).

Preferably each relief comprises two respective sharp edge portions arranged in radial and axial end position. By the expression "sharp edge" it is meant that, at least at each edge portion of each relief, a radial end face (or portion thereof) of the relief defines with respective axial end walls (or respective portions thereof) of the relief an angle at most equal to about 90°. In this way the cutting operation of the elongated element is further facilitated as it is possible to make a clean cut at the plurality of reliefs.

In one embodiment, for each relief, an angle formed between a radial end face (or portion thereof) of the relief and a respective axial end wall (or portion thereof) of the relief is greater than or equal to 25°, more preferably greater than or equal to 30°, and/or less than or equal to 65°, more preferably less than or equal to 60°, for example 45°. In this way edge portions of each relief are made which are radially protruding with respect to a substantially axially central portion of the radial end face of the relief to facilitate the capture and the retention of the elongated element by the side surfaces of the rollers.

Typically, an advancement direction of the continuous elongated element is substantially aligned to a longitudinal dimension of said continuous elongated element.

Preferably a section of the continuous elongated element substantially perpendicular to an advancement direction of the continuous elongated element has a parallelogram contour, more preferably rectangular and/or having shorter sides and longer sides with a length ratio greater than or equal to ten (i.e. the element is ribbon-like). Preferably said first and second roller contact said continuous elongated element at said longer sides (i.e. the axes of rotation of the rollers are substantially parallel to the longer sides of the section of the elongated element).

Typically the continuous elongated element consists of a homogeneous material. Preferably the continuous elongated element comprises, or it entirely consists of, an elastomeric compound.

Preferably the tyre production process comprises, subsequently to said feeding, mixing (e.g. with other ingredients or alone) or extruding said elastomeric compound (e.g. by means of said continuous processing machinery).

Preferably said motor comprises a single motor unit having a single motor shaft. For example the motor unit can be: a compressed air motor, an electric motor (DC, AC, universal, brushless), a hydraulic motor, an internal combustion engine, etc.

Preferably said transmission is interposed between, to mechanically connect, said motor and said first and second roller. In this way the driving force is distributed to the rollers. For example, the transmission may comprise a chain transmission to transfer the driving force to both rollers.

Preferably said transmission comprises a transmission portion mechanically interposed between said single motor unit and said first and second roller.

Preferably said transmission, more preferably said transmission portion, comprises an input shaft and an output shaft.

The expressions "input shaft", "output shaft" refer to a direction of distribution of the driving force (i.e. from the motor to the rollers through the transmission).

Preferably said input shaft is mechanically, more preferably rigidly, connected to the single motor shaft of said single motor unit for, more preferably integrally, rotating with the single motor shaft of said single motor unit.

Preferably said output shaft is mechanically connected to said first and second roller for rotating said first and second roller.

Preferably said transmission, more preferably said transmission portion, comprises a mechanical coupling between said input shaft and said output shaft for transmitting a rotation of said input shaft to said output shaft so as to limit or prevent a rotation of said output shaft not transmitted by said input shaft. Preferably said mechanical coupling comprises, more preferably consists of, a gear coupling of the type endless screw-gear wheel proceeding from said input shaft to said output shaft (for example, said input shaft is equipped with the endless screw and said output shaft is integral with, or connected to, the gear wheel meshed to said endless screw). In this way to a rotation of the endless screw follows a rotation of the gear wheel which in turn transfers the rotation to the rollers. At the same time, when the gear wheel is subjected to a mechanical torque not coming from the endless screw, the latter mechanically prevents the rotation of the gear wheel. In this way, the function of prevention of the variation of the respective rotation speed of the first and second roller as a consequence of the action exerted on at least one of the rollers not generated by the motor is achieved in a constructively simple way.

Alternatively, or in addition, the motor itself (e.g. the motor unit) is able to exert a brake action when the motor shaft is subjected to a torque 'external' to (i.e. not supplied by) the motor, to impose a rotation to the rollers independent from this external torque.

Preferably said transmission, more preferably said transmission portion, is devoid of clutch members. In this way, the motor always remains engaged with the rollers, further reducing the risk of a possible variation in the rotation speed of the rollers following an action not given by the motor.

Preferably said transmission portion comprises, more preferably consists of, a respective gearbox. In one embodiment a reduction ratio of said gearbox is greater than or equal to 1:50, more preferably greater than or equal to 1:40, and/or less than or equal to 1:20, more preferably less than or equal to 1:30. In this way it is possible to obtain a desired dragging/cutting torque at the rollers (for example as a function of the material of which the elongated element is made of, typically as a function of a viscosity of the latter).

In one alternative embodiment, said motor comprises a first and a second motor unit each having a respective motor shaft. In this case, preferably said transmission comprises a first and a second transmission portion respectively for said first and second roller, said first and second transmission portion mechanically connecting respectively said first motor unit to said first roller and said second motor unit to said second roller. Preferably said first and second transmission portion comprise a respective input shaft mechanically connected, more preferably rigidly, respectively to said first and second motor units, and a respective output shaft mechanically connected, more preferably rigidly, respectively to said first and second roller. In this way each roller is independently motorized.

Preferably said feeding device comprises, for said first and second roller respectively, an angular position transducer for measuring an angular position of said first and second roller respectively (e.g. an encoder). This angular position can be measured directly on the rollers, or indirectly, i.e. on elements (e.g. the motor shafts of the first and second motor unit, the input shafts and/or the output shafts of the two transmission portions, etc.) having respective angular position uniquely correlated with the aforementioned angular position of the rollers.

Preferably said feeding device comprises a command and control unit connected to said motor, more preferably to both said first and second motor unit, and to each angular position transducer. Preferably said command and control unit is programmed for commanding said motor at least as a function of a measurement of each angular position transducer. In this way it is possible to substantially synchronize the rotation of the first and second roller (e.g. in case they are independently motorized).

Typically said rotations of said first and second roller have opposite directions (i.e. the rollers are counter-rotating).

Preferably said rotations of said first and second roller are such that linear speeds of said respective side surfaces of the first and second roller, at a radial end of the reliefs, are (substantially, i.e. less than 10% of the theoretical value) equal to each other. Typically the first and second roller have maximum radius (e.g. taken from the axis of rotation to a radial end of a respective relief) and respective rotation speeds equal to each other. In this way it is facilitated the advancement and the cutting of the elongated element, reducing the risk of possible incorrect dragging by the rollers, which could, for example, abrade the surface of the elongated element.

Preferably said feeding device comprises, for each of said first and second roller, a respective group of bearings (e.g. ball, magnetic, etc.) arranged at the first longitudinal end of the respective roller and/or at a second longitudinal end of the respective roller opposite to said first longitudinal end. In this way the rollers are supported while facilitating their rotation.

Preferably said feeding device comprises a base body, more preferably rigid, which develops respectively along a longitudinal direction, a transversal direction and a height. Typically the longitudinal direction, the transversal direction and the height are substantially perpendicular to each other.

Preferably said base body comprises a first and a second seat which at least partially house respectively said first and second roller.

Preferably said first and second seat have a respective main development direction substantially parallel to said longitudinal direction of development of the base body.

Preferably said respective axes of rotation of the first and second roller are substantially parallel to said longitudinal direction. In this way the rollers rationally occupy their respective seats.

Preferably said base body comprises a through opening having an inlet mouth and an outlet mouth arranged at opposite sides of said base body along said height. Preferably said through opening is interposed between said first and second seat, the first and the second seat being communicating with, and more preferably contiguous to, said through opening. In this way a passage is made through the base body suitably arranged for making the continuous elongated element pass between the first and the second roller and for being able to discharge the cut strips.

Preferably said through opening develops substantially along said height. In this way, a substantially straight passage is created for the elongated element.

Preferably said first and second roller at least partially obstruct said through opening (preferably narrowing a section of a tract of said through opening). In this way the first and the second roller can interact with the elongated element occupying the through opening.

Preferably said first and second seat are counter-shaped to an envelope of a circumferential portion of the side surface of the respective roller. In this way space is saved to reduce the overall encumbrances.

Preferably said base body, more preferably at said outlet mouth of said through opening, comprises a thermal conditioning circuit, more preferably for cooling. In fact, the feeding device is typically arranged in the vicinity of a continuous processing machinery, which usually operates at high temperatures, potentially harmful to the feeding device.

According to an aspect the invention relates to a feeding apparatus of a continuous elongated element comprising an advancement system for advancing said continuous elongated element along a first tract with an advancement direction, said advancement system comprising the feeding device according to the present invention placed at an outlet of the first tract for feeding in continuous with a feeding speed said continuous elongated element to a feeding point corresponding to said outlet of said first tract

The terms 'upstream', 'downstream', 'in an intermediate, initial, terminal position', 'inlet', 'outlet' and the like refer to relative positions or placements between elements and/or regions of the apparatus with reference to the advancement direction of the continuous elongated element.

Preferably the feeding apparatus comprises a measuring system for measuring in continuous on said continuous elongated element a quantity suitable for evaluating an actual flow rate of said continuous elongated element fed in continuous to said feeding point.

By 'flow rate' of a continuous elongated element it is meant the quantity (in terms of volume or mass, linked to each other by the density of the material) of continuous elongated element which passes through a point per unit time.

Preferably the feeding apparatus comprises respective a command and control unit connected to said advancement system and to said measuring system and programmed for commanding in continuous said advancement system for adjusting in continuous said feeding speed as a function of said measured quantity and of a reference value of feeding flow rate of said continuous elongated element in said feeding point.

In this way the feeding apparatus can dose the continuous elongated element, i.e. it can continuously feed this element to the feeding point (e.g. to a continuous processing machinery) by controlling its actual flow rate.

In fact, in case of 'irregular' continuous elongated element (i.e. having a cross section that varies moving longitudinally along the elongated element), it may not be sufficient, for some applications, to control the feeding speed in order to control the actual flow rate. The aforesaid feeding apparatus, thanks to the measurement of the quantity suitable for evaluating the actual flow rate and the control of the feeding speed as a function of such quantity, thanks to the feeding device according to the present invention, allows the dosage also of 'irregular' elongated elements.

By the expression " in continuous" referred to an operation relating to the continuous elongated element it is meant the temporally close repetition of this operation in order to spatially resolve this elongated element in an appropriate way, for example so that this operation is performed on successive contiguous points of the elongated element longitudinally distant from each other in the order of the centimetres or even less than one centimetre.

Preferably the command and control unit of the feeding apparatus is operatively connected to, more preferably comprises, said command and control unit of the feeding device.

Preferably said quantity comprises, more preferably it corresponds to, geometrical information sufficient for calculating, at least in an approximate way, a value representative of an areal extension of a section of said continuous elongated element on a plane substantially perpendicular to said advancement direction.

Preferably said measuring system comprises at least one optical detection device for detecting in continuous in a detection point along said first tract said geometrical information. In this way, a contactless detection is performed not to disturb the advancement of the elongated element.

In one alternative embodiment, said quantity can be a mass per unit length (i.e. the measuring system dynamically weighs a longitudinal tract of the continuous elongated element while it advances).

Preferably said geometrical information comprises an altimetric profile of at least a portion of a contour of said section with respect to a reference height. In this way, it is possible to calculate the areal extension of the section taking into account the actual profile of at least a portion of the contour of the section. In this way it is possible to comprise in the calculation of the areal extension possible defects (e.g. superficial, such as lacks and/or excesses of material, variations in the shape of the section, etc.) of the elongated element to improve the accuracy of the calculation of the areal extension of the section.

Preferably said optical detection device comprises a matrix camera, having an optical axis, and a linear laser source, capable of emitting a linear laser beam having a propagation axis (arranged at a certain angle with respect to the optical axis, for example 40°). In this way it is possible to acquire the geometrical information by means of laser triangulation which allows a scan by lines of a surface of the elongated element, i.e. a substantially punctual scan along the longitudinal dimension, to obtain the altimetric profile of at least a portion of the contour of the section (and therefore with the advancement of the elongated element, the altimetric profile of at least a portion of the aforementioned surface of the elongated element is obtained).

In one embodiment, said geometrical information comprises an altimetric profile of a (substantially whole) contour of said section. Preferably said measuring system comprises a further optical detection device arranged at the opposite side of the continuous elongated element with respect to said optical detection device. Preferably the further optical detection device comprises the same features of the aforementioned optical detection device. In this way, the accuracy of detection of the geometrical information by means of laser triangulation is increased, since it is possible to detect possible surface defects also at a further surface of the elongated element (e.g. up to also substantially detect the whole geometrical contour of the section).

Preferably said command and control unit of said feeding apparatus is programmed for calculating in continuous a value representative of an areal extension of said section as a function of said geometrical information. In this way, being the areal extension of the section substantially punctual along the advancement direction, it is possible to achieve a high dosing accuracy since it is possible to evaluate the actual flow rate in a substantially punctual way (as described below).

Preferably said command and control unit of the feeding apparatus is programmed for calculating in continuous a theoretical value of the feeding speed as a function of a ratio between said reference value of feeding flow rate and said value representative of the areal extension of the section. In this way the actual flow rate at the feeding point is implicitly evaluated and it is compared with the reference value of the flow rate.

Preferably adjusting in continuous said feeding speed comprises setting said feeding speed equal to said theoretical value. In this way the flow rate actually fed to the feeding point corresponds to the desired flow rate value.

Preferably commanding in continuous said advancement system for adjusting in continuous said feeding speed comprises commanding in continuous (solely) said feeding device, more preferably commanding in continuous said motor, more preferably said single motor unit for adjusting (e.g. accelerating, slowing down) said rotation of said first and second roller.

Preferably said command and control unit of the feeding apparatus is programmed for calculating (more preferably as a function of said feeding speed) a time delay spent by said section for going from said detection point to said feeding point. Preferably said command and control unit of the feeding apparatus is programmed for commanding in continuous said advancement system for adjusting in continuous said feeding speed also as a function of said time delay, more preferably when said section has reached said feeding point. In this way, the physical extension of the feeding apparatus is considered in the adjustment of the feeding speed (since the areal extension of the section is calculated at the detection point which typically does not correspond to the feeding point).

### Brief description of the drawings

The features and the advantages of the present invention will be further clarified by the following detailed description of some embodiments, presented by way of nonlimiting example of the present invention, with reference to the attached figures, in which:
figure 1 schematically shows a section (along the plane BB of figure 2) of a feeding device according to the present invention;
figure 2 schematically shows a top view of the feeding device of figure 1;
figure 2a shows a detail of figure 2;
figure 3 schematically shows a plant according to the present invention;
figure 4 schematically shows a feeding apparatus according to the present invention.

### Detailed description of some embodiments of the invention

In the figures, the number 999 globally indicates a feeding device of a continuous elongated element 900.

Exemplarily the continuous elongated element 900 consists of a ribbon-like element of green homogeneous elastomeric compound. Exemplarily a section (not shown) of the continuous elongated element, perpendicular to an advancement direction 104 of the continuous elongated element, is substantially rectangular (neglecting possible surface defects, not shown), for example with longer sides about 20 cm long and shorter sides about 3 cm high.

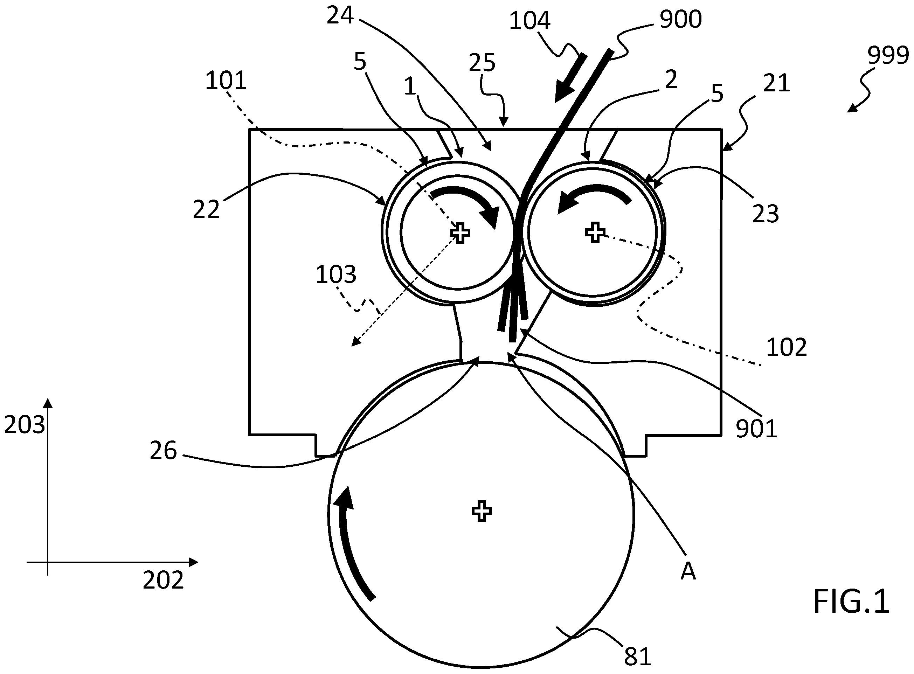

Exemplarily the feeding device 999 comprises a first roller 1 and a second roller 2 arranged side by side and having respective axes of rotation 101, 102 (identified by the symbol + in figure 1) arranged parallel to each other and at a mutual fixed distance D (possibly adjustable).

Exemplarily the first 1 and the second roller 2 have respective side surfaces 4 which develop with cylindrical symmetry about the respective axis of rotation 101, 102, each side surface 4 comprising a respective plurality of radial reliefs 5 with closed circumferential development arranged in succession along an axial direction 100. Exemplarily, in use, the side surface 4 of each roller captures the continuous elongated element 900 at the longer sides of the elongated element.

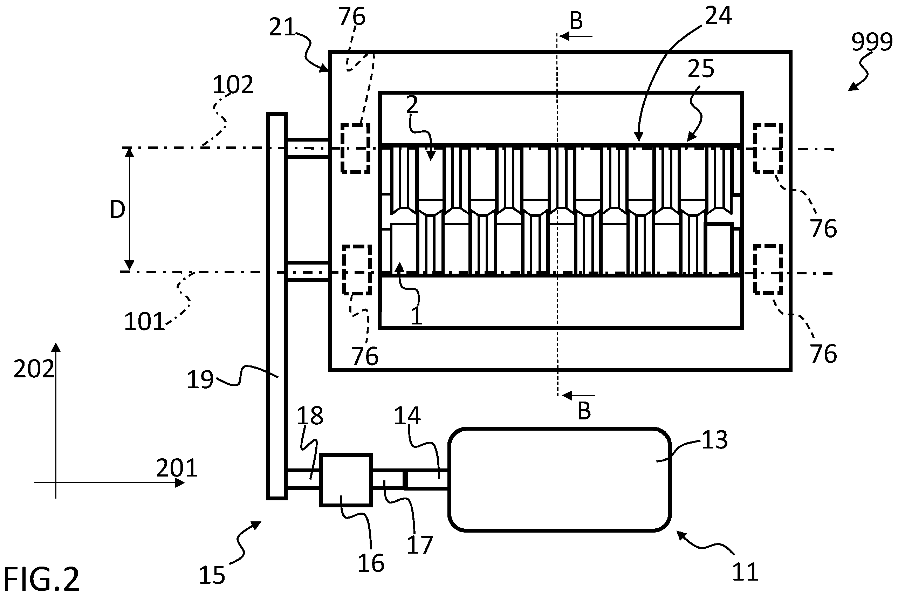

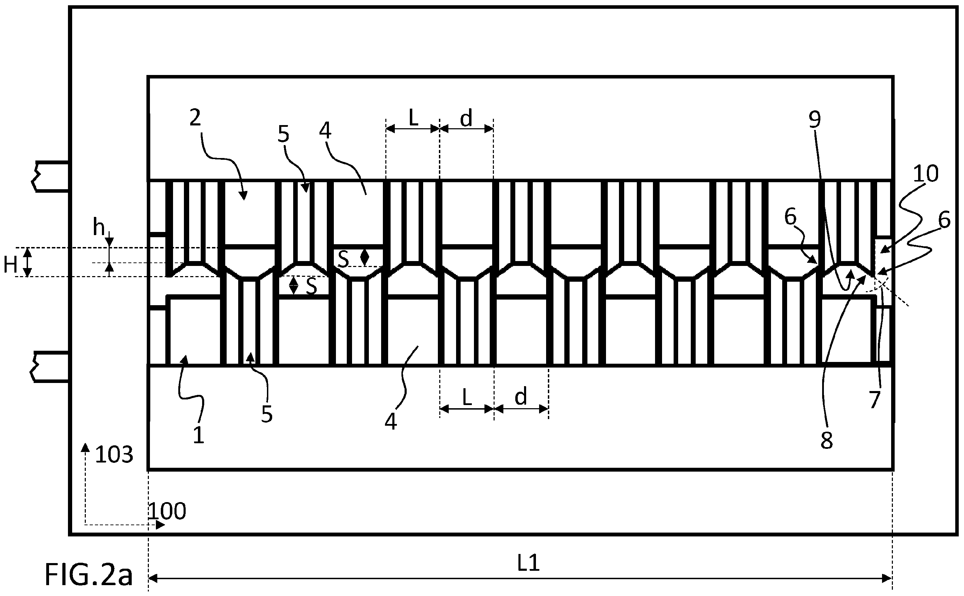

Exemplarily the pluralities of reliefs 5 of the first 1 and of the second roller 2 are reciprocally intermeshed (fig. 1, 2, 2a), where adjacent reliefs are in mutual close proximity along the axial direction 100 (i.e. they slide reciprocally or they are slightly, at least partially, separated).

Exemplarily (fig. 2a) the pluralities of reliefs 5 are reciprocally intermeshed so that, at each relief, the side surfaces 4 of the first 1 and of the second roller 2 are at a minimum radial distance S of about 30 mm.

Exemplarily (fig. 2a) each relief 5 has a constant axial width L moving along a radial direction 103. Exemplarily, each axial width L is equal to about 5 cm.

Exemplarily (fig.2a) the reliefs 5 have respective axial widths L and respective maximum radial heights H, and, in the exemplarily shown embodiment, also minimum radial heights h (at an axially central portion of a radial end face of each relief) equal to each other. Exemplarily each maximum radial height H is equal to 4 cm. Exemplarily each minimum radial height h is equal to about 3 cm.

Exemplarily (fig. 2, 2a) the reliefs 5 are equally spaced to each other along the axial direction 100 and the axial width L of each relief 5 is equal to an axial distance d between subsequent reliefs along the respective succession.

Exemplarily the first 1 and the second roller 2 have a same axial extension (fig. 2, 2a) and each plurality of reliefs 5 is equally distributed along the whole axial extension of the respective roller (for example, the pluralities of reliefs are offset from each other along the axial direction to allow the pluralities of reliefs to be intermeshed).

Exemplarily (fig. 2a) each relief 5 comprises two respective sharp edge portions 6 arranged in radial and axial end position. Exemplarily (fig. 2a), for each relief 5, an angle 7 formed between a portion 8 of a radial end face 9 of the relief and a respective axial end wall 10 of the relief is equal to about 45°.

Exemplarily the feeding device 999 comprises a motor 11 and a transmission 15 mechanically connected to the first 1 and to the second roller 2 to rotate the first 1 and the second roller 2 about the respective axes of rotation 101, 102 with a respective rotation speed so as to limit or prevent a variation of the respective rotation speed of the first 1 and of the second roller 2 as a consequence of an action exerted on at least one of the rollers not generated by the motor 11.

Exemplarily the transmission 15 is interposed between, to mechanically connect, the motor 11 to the first 1 and to the second roller 2.

Exemplarily the motor 11 comprises a single motor unit 13 having a single motor shaft 14.

Exemplarily (figure 2) the transmission 15 comprises a transmission portion 16 mechanically interposed between the single motor unit 13 and the first 1 and the second roller 2 and which comprises an input shaft 17 and an output shaft 18.

Exemplarily the input shaft 17 is rigidly mechanically connected to the single motor shaft 14 of the single motor unit 13 to rotate integrally with the single motor shaft.

Exemplarily the output shaft 18 is mechanically connected to the first 1 and to the second roller 2, for example by means of a chain transmission 19 (shown schematically in fig. 2), to rotate the rollers.

Exemplarily the transmission portion 16 comprises a mechanical coupling (not shown) between the input shaft 17 and the output shaft 18 for transmitting a rotation of the input shaft 17 to the output shaft 18 so as to limit or prevent a rotation of the output shaft 18 not transmitted by the input shaft 17. Exemplarily the mechanical coupling consists of a gear coupling of the type endless screw-gear wheel proceeding from the input shaft 17 to the output shaft 18 (for example, not shown, the input shaft is equipped with the endless screw and the output shaft is integral with the gear wheel meshed with the aforementioned endless screw). In this way it is the geometry of the mechanical coupling that physically prevents a rotation of the output shaft if not transmitted by the input shaft (the rotation of the gear wheel is prevented as it cannot generate a corresponding rotation of the endless screw about the respective axis, being allowed only a transmission of the motion in the opposite direction, i.e. from the endless screw to the gear wheel).

Exemplarily the transmission portion 16 is devoid of clutch members and consists of a gearbox having a reduction ratio equal to 1:40 (i.e. a torque exerted by the single motor shaft connected to the transmission portion is multiplied by forty at the output of the gearbox, while a rotation speed of the input shaft is divided by forty at the output shaft of the gearbox. In the jargon, this motor-gearbox coupling is called a gear motor).

Exemplarily the feeding device 999 comprises, for each roller, a group of ball bearings 76 (schematically shown) arranged at a first and a at second longitudinal end of the respective roller.

Exemplarily the feeding device 999 comprises a rigid base body 21 which develops respectively along a longitudinal direction 201, a transversal direction 202 and a height 203 perpendicular to each other.

Exemplarily the base body 21 comprises a first 22 and a second seat 23 shaped to at least partially house respectively the first 1 and the second roller 2, the first 22 and the second seat 23 exemplarily having a respective main development direction parallel to the longitudinal direction 201 of development of the base body 21.

Exemplarily the respective axes of rotation 101, 102 of the first 1 and of the second roller 2 are parallel to the longitudinal direction 201.

Exemplarily the base body 21 comprises a through opening 24 which extends along the height 203 and having an inlet mouth 25 and an outlet mouth 26 arranged at opposite sides of the base body 21 along the height 203. Exemplarily the through opening 24 is interposed between the first 22 and the second seat 23, the first and second seats being communicating with, and contiguous to, the through opening 24.

Exemplarily a length L1 of the inlet mouth 25 along the longitudinal direction 201 is equal to about 65 cm.

Exemplarily the first 1 and the second roller 2, when housed respectively in the first 22 and in the second seat 23, partially obstruct the through opening 24, narrowing a section of a tract of the through opening 24.

Exemplarily the first 22 and the second seat 23 are counter-shaped to an envelope of a circumferential portion of the side surface 4 of the second roller 2.

Exemplarily the base body 21, at the outlet mouth 26, comprises a cooling circuit (not shown).

In use, the feeding device 999 allows to perform a method for feeding a continuous elongated element 900.

Exemplarily the motor 11 is activated to rotate the first 1 and the second roller 2.

Exemplarily, with the first 1 and the second roller 2 in rotation, the continuous elongated element 900 is arranged between the two rollers so that it can be captured by the first 1 and by the second roller 2 by means of their respective side surfaces 4 for advancing the continuous elongated element 900 along an advancement direction 104 and for cutting at the same time the continuous elongated element along a plurality of cutting lines parallel to the advancement direction 104. In this way a plurality of strips 901 is obtained.

Exemplarily a respective rotation speed of the first 1 and second roller 2 is controlled (e.g. by the motor 11 and by the transmission 15) so as to limit or prevent a variation of the respective rotation speed due to an action exerted on at least one of the rollers by the continuous elongated element 900.

Exemplarily the rotations of the first 1 and second roller 2 have opposite directions (i.e. the rollers are counter-rotating) and are such that linear speeds of the side surfaces 4 of the first 1 and second roller 2, at a radial end of the reliefs 5, are equal to each other. Exemplarily the first 1 and the second roller 2 have maximum radius and respective rotation speeds equal to each other.

Exemplarily it is provided feeding in continuous the continuous cut elongated element 900 to a feeding point A with a feeding speed.

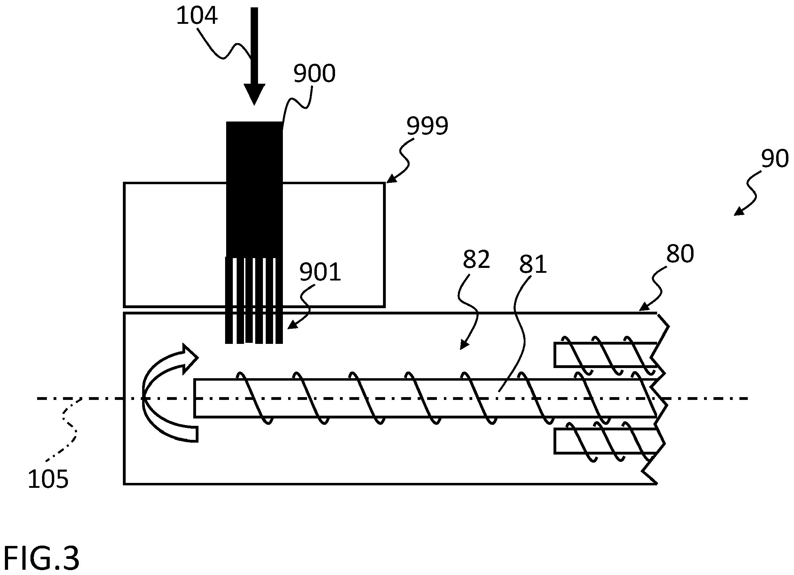

With reference to figure 3, the number 90 globally indicates a plant comprising the feeding device 999 according to the present invention and a continuous processing machinery 80 comprising a feeding screw 81 (also shown in fig. 1) having a respective axis of rotation 105, wherein the feeding device 999 is arranged in proximity of the feeding screw 81. Exemplarily the continuous processing machinery 80 is a planetary extruder, and the feeding screw 81 exemplarily coincides with an initial portion 82 of the central spindle without satellites.

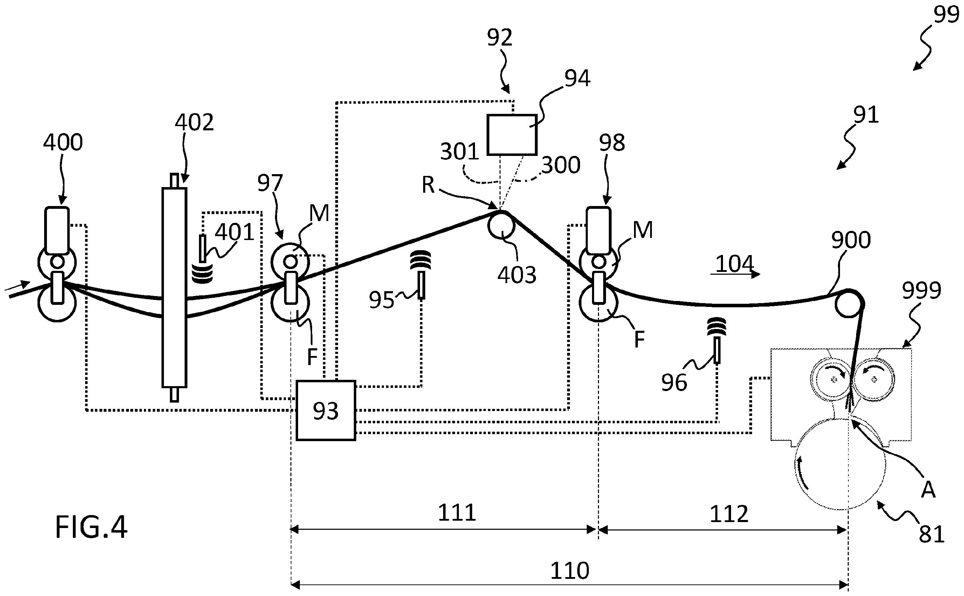

With reference to figure 4, the number 99 globally indicates a feeding apparatus of a continuous elongated element 900 comprising an advancement system 91 for advancing the continuous elongated element 900 along a first tract 110 with the advancement direction 104, the advancement system 91 comprising the feeding device 999 according to the present invention arranged at an outlet of the first tract 110 for feeding in continuous with a feeding speed the continuous elongated element 900 to the feeding point A corresponding to the outlet of the first tract 110.

Exemplarily the feeding apparatus 99 comprises a measuring system 92 for measuring in continuous on the continuous elongated element a quantity suitable for evaluating an actual flow rate of the continuous elongated element fed in continuous to the feeding point A.

Exemplarily the quantity suitable for evaluating an actual flow rate of the continuous elongated element corresponds to geometrical information sufficient to calculate, at least in an approximate way, a value representative of an areal extension of a section of the continuous elongated element 900 on a plane perpendicular to the advancement direction 104. Exemplarily the geometrical information comprises an altimetric profile of at least a portion (not shown) of a contour of the section of the elongated element with respect to a reference height (e.g. a side surface of a support roller 403 of the advancement system 91 on which the longitudinal element rests advancing).

Exemplarily the measuring system 92 comprises an optical detection device 94 (schematically shown) for detecting in continuous in a detection point R along the first tract 110 the altimetric profile of the portion of the contour of the section facing towards the optical detection system 94, with respect to the side surface of the support roller 403. For this purpose, exemplarily the optical detection device 94 is based on laser triangulation technology and comprises a matrix camera (not shown), having an optical axis 300, and a linear laser source (not shown), adapted to emit a linear laser beam 301 having a propagation axis (which exemplary forms an angle of about 40° with the optical axis 300).

In one embodiment (not shown), the measuring system can comprise a further optical detection device comprising the same features of the optical detection device and arranged at the opposite side of the elongated element with respect to the single optical detection device 94 (i.e. below the elongated element), for detecting an altimetric profile of a further portion of contour of the section at a further detection point offset, along the longitudinal development of the elongated element, with respect to the support roller 403 (so that the latter does not interfere with detection).

Exemplarily the feeding apparatus 99 comprises a command and control unit 93 connected to the advancement system 91 and to the measuring system 92.

Exemplarily the command and control unit 93 is programmed for commanding in continuous the advancement system 91 for adjusting in continuous the feeding speed as a function of the quantity measured by the measuring system 92 and of a reference value of feeding flow rate of the continuous elongated element 900 in the feeding point A.

For example, the command and control unit 93 is programmed for calculating in continuous a value representative of the areal extension of the section as a function of the altimetric profile and for calculating in continuous a theoretical value of the feeding speed as a function of a ratio between the reference value of feeding flow rate and the value representative of the areal extension of the section. Exemplarily adjusting in continuous the feeding speed comprises setting the feeding speed equal to the theoretical value, and commanding in continuous the advancement system 91 for adjusting in continuous the feeding speed exemplarily comprises commanding in continuous the single motor unit 13 for adjusting (e.g. accelerating, slowing down) the rotation of the first 1 and second roller 2.

Exemplarily the command and control unit 93 is programmed for calculating, as a function of the feeding speed, a time delay spent by the section for going from the detection point R to the feeding point A and for commanding in continuous the advancement system 91 for adjusting in continuous the feeding speed also as a function of the aforementioned time delay (e.g. when the section has reached the feeding point A).

Exemplarily the first tract 110 comprises a detection portion 111 which contains the detection point R, wherein exemplarily an inlet of the detection portion 111 coincides with an inlet of the first tract 110. Exemplarily the first tract 110 comprises a buffering portion 112 arranged downstream of, and continuous to, the detection portion 111, wherein exemplarily an outlet of the buffering portion 112 coincides with an outlet of the first tract 110.

Exemplarily the advancement system 91 is suitable for subjecting to tension the continuous elongated element along both the detection portion 111 and along the buffering portion 112, wherein exemplarily a reference tension along the buffering portion 112 is lower than a reference tension along the detection portion 111 (as shown by the bend formed by the elongated element). The lower tension along the buffering portion 112 provides abundance of material to avoid that, following the adjustment of the feeding speed by means of the feeding device 999, the elongated element can be subjected to excessive stretching (which could damage it and/or break it).

Exemplarily the feeding apparatus 99 comprises, respectively for the detection portion 111 and the buffering portion 112, a respective tension sensor 95, 96 suitable for detecting in continuous, exemplarily without contact, a tension of the continuous elongated element along the detection portion 111 and the buffering portion 112 respectively.

Exemplarily the command and control unit 93 is connected to each tension sensor 95, 96.

Exemplarily the advancement system 99 comprises, for the detection portion 111 and the buffering portion 112 respectively, a respective advancement device 97, 98 arranged at an inlet of respectively the detection portion 111 and the buffering portion 112, and structured for adjusting an advancement of the continuous elongated element. Exemplarily the advancement devices 97 and 98 are structured for respectively braking and advancing the continuous elongated element.

Exemplarily each advancement device 97, 98 is structured for gripping the continuous elongated element. Exemplarily each advancement device 97, 98 comprises a main roller M controllable by the command and control unit 93 and a further roller F (optionally also controllable by the command and control unit 93) arranged parallel to, and kept in thrust against, the main roller M.

Exemplarily the command and control unit 93 is also programmed for comparing in continuous the tension detected respectively along the detection portion 111 and the buffering portion 112 with a respective reference tension and for commanding in continuous the respective advancement device 97, 98 as a function of the respective comparison between the tension detected respectively along the detection portion 111 and the buffering portion 112 and the respective reference tension.

Exemplarily the apparatus 99 comprises, upstream of the first tract 110, a centring portion for centring the elongated element. At this centring portion, the apparatus 99 exemplarily comprises a further advancement device 400 for dragging the elongated element into unloading from a possible storage device (not shown, e.g. a pallet, a reel, etc.), a further tension sensor 401 for detecting a tension of the elongated element along the centring portion and a pair of rollers with vertical axis 402 (only one is visible) for centring (e.g. by torsion) the elongated element in collaboration with the further advancement device 400 and/or with the advancement device 97 located at the inlet of the detection portion 111. Exemplarily the command and control unit 93 is connected to the further detection device 400 and to the further tension sensor 401.

## Claims

1. Feeding device (999) of a continuous elongated element (900), the device (999) comprising:
- a first roller (1) and a second roller (2) arranged side by side and having respective axes of rotation (101, 102) substantially parallel to each other;
- a motor (11) and a transmission (15) mechanically connected to said first (1) and second roller (2) for rotating said first (1) and second roller (2) about said respective axes of rotation (101, 102) with a respective rotation speed, so as to limit or prevent a variation of said respective rotation speed of said first (1) and second roller (2) as a consequence of an action exerted on at least one of said first (1) and second roller (2) not generated by said motor (15),
wherein said first (1) and second roller (2) have respective side surfaces (4) which develop with cylindrical symmetry about the respective axis of rotation (101, 102), each side surface (4) comprising a respective plurality of radial reliefs (5) with circumferential closed development arranged in succession along a substantially axial direction (100), and
wherein said pluralities of reliefs (5) of said first (1) and second roller (2) are reciprocally intermeshed, wherein adjacent reliefs (5) are in mutual close proximity along said substantially axial direction (100), for advancing, through said rotation of said first (1) and second roller (2), said continuous elongated element (900) along an advancement direction (104) and cutting said continuous elongated element (900) along a plurality of cutting lines substantially parallel to said advancement direction (104).

2. Device (999) according to claim 1, wherein said pluralities of reliefs (5) of said first (1) and second roller (2) are mutually intermeshed so that, at each relief (5), said side surfaces (4) of said first (1) and second roller (2) are at a minimum radial distance (S), and wherein said axes of rotation (101, 102) of said first (1) and second roller (2) are arranged at a fixed mutual distance (D).

3. Device (999) according to any one of the previous claims, wherein each relief (5) has an axial width (L) constant moving along a radial direction (103), wherein said reliefs (5) of said pluralities of reliefs have respective axial widths (L) equal to each other, wherein said reliefs (5) have respective maximum and/or minimum radial heights (H, h) equal to each other, wherein said reliefs (5) of each plurality of reliefs are equally spaced to each other along said substantially axial direction (100), wherein an axial width (L) of each relief (5) is equal to an axial distance (d) between subsequent reliefs along the respective succession, wherein said first (1) and second roller (2) have a same axial extension, and wherein each plurality of reliefs (5) is, preferably equally, distributed along a whole axial extension of the respective roller.

4. Device (999) according to any one of the previous claims, wherein each relief (5) comprises two respective sharp edge portions (6) arranged in radial and axial end position, wherein, for each relief (5), an angle (7) formed between a radial end face (9) of the relief and a respective axial end wall (10) of the relief is greater than or equal to 25°, and/or less than or equal to 65°.

5. Device (999) according to any one of the previous claims, wherein said motor (11) comprises a single motor unit (13) having a single motor shaft (14), wherein said transmission (15) is interposed between, to mechanically connect, said motor (11) and said first (1) and second roller (2), wherein said transmission (15) comprises a transmission portion (16) mechanically interposed between said single motor unit (13) and said first (1) and second roller (2) and comprising an input shaft (17), mechanically, preferably rigidly, connected to the single motor shaft (14) of said single motor unit (13) for, preferably integrally, rotating with the single motor shaft of said single motor, and an output shaft (18) mechanically connected to said first (1) and second roller (2) for rotating said first (1) and second roller (2).

6. Device (999) according to claim 5, wherein said transmission portion (16) comprises a mechanical coupling between said input shaft (17) and said output shaft (18) for transmitting a rotation of said input shaft (17) to said output shaft (18) so as to limit or prevent a rotation of said output shaft (18) not transmitted by said input shaft (17), wherein said mechanical coupling comprises a gear coupling of the type endless screw-gear wheel proceeding from said input shaft (17) to said output shaft (18), wherein said transmission (15) is devoid of clutch members, and wherein said transmission portion (16) comprises a respective gearbox.

7. Device (999) according to any one of the previous claims, wherein said rotations of said first (1) and second roller (2) are such that linear speeds of said respective side surfaces (4) of the first and second rollers, at a radial end of the reliefs (5), are substantially equal to each other, wherein said feeding device (999) comprises, for each of said first (1) and second roller (2), a group of bearings (76) arranged at a first longitudinal end of the respective roller and/or at a second longitudinal end of the respective roller opposite to said first longitudinal end.

8. Device (999) according to any one of the previous claims, comprising a base body (21) which develops respectively along a longitudinal direction (201), a transversal direction (202) and a height (203), wherein said base body (21) comprises a first (22) and a second seat (23) which at least partially house respectively said first (1) and second roller (2), wherein said base body (21) comprises a through opening (24) having an inlet mouth (25) and an outlet mouth (26) arranged at opposite sides of said base body (21) along said height (203), wherein said through opening (24) is interposed between said first (22) and second seat (23), the first (22) and the second seat (23) being communicating with, and preferably contiguous to, said through opening (24), wherein said first (1) and second roller (2) at least partially obstruct said through opening (24).

9. Feeding apparatus (99) of a continuous elongated element (900) comprising an advancement system (91) for advancing said continuous elongated element along a first tract (110) with an advancement direction (104), said advancement system (91) comprising the feeding device (999) according to any one of the claims from 1 to 8 placed at an outlet of the first tract (110) for feeding in continuous with a feeding speed said continuous elongated element to a feeding point (A) corresponding to said outlet of said first tract (110), wherein the feeding apparatus (99) comprises a measuring system (92) for measuring in continuous on said continuous elongated element a quantity suitable for evaluating an actual flow rate of said continuous elongated element fed in continuous to said feeding point (A), wherein the feeding apparatus (99) comprises a command and control unit (93) connected to said advancement system (91) and to said measuring system (92) and programmed for commanding in continuous said advancement system (91) for adjusting in continuous said feeding speed as a function of said measured quantity and of a reference value of feeding flow rate of said continuous elongated element in said feeding point (A).

10. Apparatus (99) according to claim 9, wherein said quantity comprises geometrical information sufficient for calculating, at least in an approximate way, a value representative of an areal extension of a section of said continuous elongated element (900) on a plane substantially perpendicular to said advancement direction (104), and wherein said measuring system (92) comprises an optical detection device (94) for detecting in continuous in a detection point (R) along said first tract (110) said geometrical information.

11. Apparatus (99) according to claim 10, wherein said geometrical information comprises an altimetric profile of at least a portion of a contour of said section with respect to a reference height, and wherein said optical detection device (94) comprises a matrix camera, having an optical axis (300), and a linear laser source, able to emit a linear laser beam (301) having a propagation axis

12. Apparatus (99) according to any one of claims from 9 to 11, wherein said command and control unit (93) is programmed for calculating in continuous a value representative of an areal extension of said section as a function of said geometrical information, and for calculating in continuous a theoretical value of the feeding speed as a function of a ratio between said reference value of feeding flow rate and said value representative of the areal extension of the section, wherein adjusting in continuous said feeding speed comprises setting said feeding speed equal to said theoretical value, wherein commanding in continuous said advancement system (91) for adjusting in continuous said feeding speed comprises commanding in continuous said feeding device (999), and wherein said command and control unit (93) is programmed for calculating a time delay spent by said section for going from said detection point to said feeding point, and for commanding in continuous said advancement system (91) for adjusting in continuous said feeding speed also as a function of said time delay.

13. Plant (90) comprising the feeding device (999) according to any one of claims from 1 to 8 and a continuous processing machinery (80) comprising a feeding screw (81) having a respective axis of rotation (105), wherein said feeding device (999) is placed in proximity of said feeding screw (81) and wherein said continuous processing machinery (80) is one of the following: planetary extruder, twin-screw mixer, ring extruder, single-screw extruder, twin-screw extruder, feeding extruder for fabric rubberizing calenders, extruder for semi-finished products.

14. Method for feeding a continuous elongated element (900), the method comprising:
- providing a first roller (1) and a second roller (2) arranged side by side and having respective axes of rotation (101, 102) arranged substantially parallel to each other, wherein said first (1) and second rollers (2) have respective side surfaces (4) which develop with cylindrical symmetry about the respective axis of rotation (101, 102), each side surface comprising a respective plurality of radial reliefs (5) with circumferential closed development arranged in succession along a substantially axial direction (100), wherein said pluralities of reliefs (5) of said first (1) and second roller (2) are reciprocally intermeshed, wherein adjacent reliefs (5) are in mutual close proximity along said substantially axial direction (100);
- rotating said first (1) and second roller (2),
- with said first (1) and second roller (2) in rotation, arranging said continuous elongated element (900) so as to be able to be captured by said first (1) and second roller (2) by said respective side surfaces (4) for advancing said continuous elongated element (900) along an advancement direction (104) and for cutting at the same time said continuous elongated element (900) substantially along a plurality of cutting lines parallel to said advancement direction (104);
- feeding in continuous said cut continuous elongated element (900) to a feeding point (A) with a feeding speed;
- controlling a respective rotation speed of said first (1) and second roller (2) so as to limit or prevent a variation of said respective rotation speed due to an action exerted on at least one of said first (1) and second roller (2) by said continuous elongated element (900).

15. Tyre production process comprising the method for feeding a continuous elongated element according to the previous claim.

## Patentansprüche

1. Fördereinrichtung (999) für ein kontinuierliches längliches Element (900), wobei die Einrichtung (999) umfasst:
- eine erste Walze (1) und eine zweite Walze (2), die nebeneinander angeordnet sind und jeweilige Drehachsen (101, 102) aufweisen, die im Wesentlichen parallel zueinander sind;
- einen Motor (11) und ein Getriebe (15), das mechanisch mit der ersten (1) und der zweiten Walze (2) verbunden ist, zum Drehen der ersten (1) und der zweiten Achse (2) mit einer jeweiligen Drehgeschwindigkeit um die jeweiligen Drehachsen (101, 102), um eine Änderung der jeweiligen Drehgeschwindigkeit der ersten (1) und der zweiten Walze (2) infolge einer nicht durch den Motor (15) erzeugten Wirkung, die auf mindestens eine der ersten (1) und der zweiten Walze (2) ausgeübt wird, zu begrenzen oder zu verhindern,
wobei die erste (1) und die zweite Walze (2) jeweilige Seitenflächen (4) aufweisen, die sich mit Zylindersymmetrie um die jeweilige Drehachse (101, 102) entwickeln, wobei jede Seitenfläche (4) eine jeweilige Mehrzahl von radialen Reliefs (5) mit umfänglich geschlossener Entwicklung umfasst, die in Aufeinanderfolge entlang einer im Wesentlichen axialen Richtung (100) angeordnet sind, und
wobei die Mehrzahlen von Reliefs (5) der ersten (1) und der zweiten Walze (2) miteinander verzahnt sind, wobei benachbarte Reliefs (5) entlang der im Wesentlichen axialen Richtung (100) in unmittelbarer Nähe zueinander sind, um durch die Drehung der ersten (1) und der zweiten Walze (2) das kontinuierliche längliche Element (900) entlang einer Vorschubrichtung (104) vorzuschieben und das kontinuierliche längliche Element (900) entlang einer Mehrzahl von im Wesentlichen parallel zur Vorschubrichtung (104) verlaufenden Schnittlinien zuzuschneiden.

2. Einrichtung (999) nach Anspruch 1, wobei die Mehrzahlen von Reliefs (5) der ersten (1) und der zweiten Walze (2) so miteinander verzahnt sind, dass an jedem Relief (5) die Seitenflächen (4) der ersten (1) und der zweiten Walze (2) in einem minimalen radialen Abstand (S) sind, und wobei die Drehachsen (101, 102) der ersten (1) und der zweiten Walze (2) in einem festen gegenseitigen Abstand (D) angeordnet sind.

3. Einrichtung (999) nach einem der vorhergehenden Ansprüche, wobei jedes Relief (5) eine axiale Breite (L) aufweist, die sich entlang einer radialen Richtung (103) konstant bewegt, wobei die Reliefs (5) der Mehrzahlen von Reliefs jeweilige axiale Breiten (L) aufweisen, die einander gleichen, wobei die Reliefs (5) jeweilige maximale und/oder minimale radiale Höhen (H, h) aufweisen, die einander gleichen, wobei die Reliefs (5) jeder Mehrzahl von Reliefs entlang der im Wesentlichen axialen Richtung (100) in gleichen Abständen voneinander angeordnet sind, wobei eine axiale Breite (L) jedes Reliefs (5) gleich einem axialen Abstand (d) zwischen aufeinanderfolgenden Reliefs entlang der jeweiligen Aufeinanderfolge ist, wobei die erste (1) und die zweite Walze (2) eine gleiche axiale Ausdehnung aufweisen, und wobei jede Mehrzahl von Reliefs (5) entlang einer gesamten axialen Ausdehnung der jeweiligen Walze vorzugsweise gleich verteilt ist.

4. Einrichtung (999) nach einem der vorhergehenden Ansprüche, wobei jedes Relief (5) zwei jeweilige scharfe Kantenabschnitte (6) umfasst, die in radialer und axialer Endposition angeordnet sind, wobei für jedes Relief (5) ein Winkel (7), der zwischen einer radialen Endfläche (9) des Reliefs und einer jeweiligen axialen Endwand (10) des Reliefs gebildet wird, größer als oder gleich 25° und/oder kleiner als oder gleich 65° ist.

5. Einrichtung (999) nach einem der vorhergehenden Ansprüche, wobei der Motor (11) eine einzige Motoreinheit (13) mit einer einzigen Motorwelle (14) umfasst, wobei das Getriebe (15) zum mechanischen Verbinden des Motors (11) und der ersten (1) und der zweiten (2) Walze zwischen denselben eingefügt ist, wobei das Getriebe (15) einen Getriebeabschnitt (16) umfasst, der mechanisch zwischen der einzigen Motoreinheit (13) und der ersten (1) und der zweiten Walze (2) eingefügt ist und eine Antriebswelle (17), die mit der einzigen Motorwelle (14) der einzigen Motoreinheit (13) mechanisch, vorzugsweise starr, verbunden ist, um sich vorzugsweise ganzheitlich mit der einzigen Motorwelle des einzigen Motors zu drehen, und eine Abtriebswelle (18) umfasst, die mechanisch mit der ersten (1) und der zweiten Walze (2) verbunden ist, um die erste (1) und die zweite Walze (2) zu drehen.

6. Einrichtung (999) nach Anspruch 5, wobei der Getriebeabschnitt (16) eine mechanische Kupplung zwischen der Antriebswelle (17) und der Abtriebswelle (18) zum Übertragen einer Drehung der Antriebswelle (17) auf die Abtriebswelle (18) umfasst, um eine nicht durch die Antriebswelle (17) übertragene Drehung der Abtriebswelle (18) zu begrenzen oder zu verhindern, wobei die mechanische Kupplung eine Zahnkupplung vom Typ Schneckenzahnrad umfasst, die von der Antriebswelle (17) zur Abtriebswelle (18) verläuft, wobei das Getriebe (15) keine Kupplungselemente aufweist, und wobei der Getriebeabschnitt (16) ein jeweiliges Zahnradgehäuse umfasst.

7. Einrichtung (999) nach einem der vorhergehenden Ansprüche, wobei die Drehungen der ersten (1) und der zweiten Walze (2) derart sind, dass lineare Geschwindigkeiten der jeweiligen Seitenflächen (4) der ersten und der zweiten Walze an einem radialen Ende der Reliefs (5) einander im Wesentlichen gleichen, wobei die Fördereinrichtung (999) für jede der ersten (1) und der zweiten Walze (2) eine Gruppe von Lagern (76) umfasst, die an einem ersten Längsende der jeweiligen Walze und/oder an einem zweiten Längsende der jeweiligen Walze gegenüber dem ersten Längsende angeordnet ist.

8. Einrichtung (999) nach einem der vorhergehenden Ansprüche, umfassend einen Basiskörper (21), der sich jeweils entlang einer Längsrichtung (201), einer Querrichtung (202) und einer Höhe (203) entwickelt, wobei der Basiskörper (21) einen ersten Sitz (22) und einen zweiten Sitz (23) umfasst, die die erste Walze (1) bzw. die zweite Walze (2) zumindest teilweise aufnehmen, wobei der Basiskörper (21) eine Durchgangsöffnung (24) mit einer Einlassmündung (25) und einer Auslassmündung (26) umfasst, die auf gegenüberliegenden Seiten des Basiskörpers (21) entlang der Höhe (203) angeordnet sind, wobei die Durchgangsöffnung (24) zwischen dem ersten (22) und dem zweiten Sitz (23) eingefügt ist, der erste (22) und der zweite Sitz (23) mit der Durchgangsöffnung (24) in Verbindung stehen und vorzugsweise benachbart dazu sind, wobei die erste (1) und die zweite Walze (2) die Durchgangsöffnung (24) zumindest teilweise versperren.

9. Fördervorrichtung (99) für ein kontinuierliches längliches Element (900), umfassend ein Vorschubsystem (91) zum Vorschieben des kontinuierlichen länglichen Elements entlang eines ersten Trakts (110) mit einer Vorschubrichtung (104), wobei das Vorschubsystem (91) die Fördereinrichtung (999) nach einem der Ansprüche 1 bis 8 umfasst, die an einem Auslass des ersten Trakts (110) zum kontinuierlichen Fördern des kontinuierlichen länglichen Elements mit einer Fördergeschwindigkeit zu einem Förderpunkt (A), der dem Auslass des ersten Trakts (110) entspricht, platziert ist, wobei die Fördervorrichtung (99) ein Messsystem (92) zum kontinuierlichen Messen einer Größe, die zum Beurteilen eines tatsächlichen Durchsatzes des kontinuierlichen länglichen Elements geeignet ist, am kontinuierlichen länglichen Element umfasst, das kontinuierlich zum Förderpunkt (A) befördert wird, wobei die Fördervorrichtung (99) eine Befehls- und Steuereinheit (93) umfasst, die mit dem Vorschubsystem (91) und dem Messsystem (92) verbunden und dazu programmiert ist, das Vorschubsystem (91) kontinuierlich zum kontinuierlichen Anpassen der Fördergeschwindigkeit als eine Funktion der Messgröße und eines Bezugswerts des Förderdurchsatzes des kontinuierlichen länglichen Elements am Förderpunkt (A) anzuweisen.

10. Vorrichtung (99) nach Anspruch 9, wobei die Größe geometrische Informationen umfasst, die ausreichen, um einen Wert, der eine Flächenausdehnung eines Teilabschnitts des kontinuierlichen länglichen Elements (900) auf einer Ebene darstellt, die im Wesentlichen senkrecht zur Vorschubrichtung (104) ist, zumindest ungefähr zu berechnen, und wobei das Messsystem (92) eine optische Erfassungseinrichtung (94) zum kontinuierlichen Erfassen der geometrischen Informationen an einem Erfassungspunkt (R) entlang des ersten Trakts (110) umfasst.

11. Vorrichtung (99) nach Anspruch 10, wobei die geometrischen Informationen ein altimetrisches Profil wenigstens eines Abschnitts einer Kontur des Teilabschnitts bezüglich einer Bezugshöhe umfassen, und wobei die optische Erfassungseinrichtung (94) eine Matrixkamera mit einer optischen Achse (300) und eine Linearlaserquelle umfasst, die zum Emittieren eines Linearlaserstrahls (301) mit einer Ausbreitungsachse in der Lage ist.

12. Vorrichtung (99) nach einem der Ansprüche 9 bis 11, wobei die Befehls- und Steuereinheit (93) dazu programmiert ist, einen Wert, der eine Flächenausdehnung des Teilabschnitts darstellt, als eine Funktion der geometrischen Informationen kontinuierlich zu berechnen und einen theoretischen Wert der Fördergeschwindigkeit als eine Funktion eines Verhältnisses zwischen dem Bezugswert des Förderdurchsatzes und dem Wert, der die Flächenausdehnung des Teilabschnitts darstellt, kontinuierlich zu berechnen, wobei das kontinuierliche Anpassen der Fördergeschwindigkeit ein Setzen der Fördergeschwindigkeit gleich dem theoretischen Wert umfasst, wobei das kontinuierliche Anweisen des Vorschubsystems (91) zum kontinuierlichen Anpassen der Fördergeschwindigkeit ein kontinuierliches Anweisen der Fördereinrichtung (999) umfasst, und wobei die Befehls- und Steuereinheit (93) dazu programmiert ist, eine Zeitverzögerung zu berechnen, die vom Teilabschnitt benötigt wird, um vom Erfassungspunkt zum Förderpunkt zu gelangen, und das Vorschubsystem (91) auch zum Anpassen der Fördergeschwindigkeit als eine Funktion der Zeitverzögerung anzuweisen.

13. Betrieb (90), umfassend die Fördereinrichtung (999) nach einem der Ansprüche 1 bis 8 und eine Maschinenanlage zur kontinuierlichen Verarbeitung (80), die eine Förderschnecke (81) mit einer jeweiligen Drehachse (105) umfasst, wobei die Fördereinrichtung (999) in der Nähe der Förderschnecke (81) platziert ist, und wobei die Maschinenanlage zur kontinuierlichen Verarbeitung (80) eines von Folgenden ist: Planetenextruder, Doppelschneckenmischer, Ringextruder, Einschneckenextruder, Doppelschneckenextruder, Förderextruder für Gewebegummierungskalander, Extruder für Halbfertigprodukte.

14. Verfahren zur Beförderung eines kontinuierlichen länglichen Elements (900), wobei das Verfahren umfasst:
- Bereitstellen einer ersten Walze (1) und einer zweiten Walze (2), die nebeneinander angeordnet sind und jeweilige Drehachsen (101, 102) aufweisen, die im Wesentlichen parallel zueinander angeordnet sind, wobei die erste (1) und die zweite Walze (2) jeweilige Seitenflächen (4) aufweisen, die sich mit Zylindersymmetrie um die jeweilige Drehachse (101, 102) entwickeln, wobei jede Seitenfläche eine jeweilige Mehrzahl von radialen Reliefs (5) mit umfänglich geschlossener Entwicklung umfasst, die in Aufeinanderfolge entlang einer im Wesentlichen axialen Richtung (100) angeordnet sind, wobei die Mehrzahlen von Reliefs (5) der ersten (1) und der zweiten Walze (2) miteinander verzahnt sind, wobei benachbarte Reliefs (5) entlang der im Wesentlichen axialen Richtung (100) in unmittelbarer Nähe zueinander sind;
- Drehen der ersten (1) und der zweiten Walze (2),
- mit der ersten (1) und der zweiten Walze (2) in Drehung Anordnen des kontinuierlichen länglichen Elements (900), damit es von der ersten (1) und der zweiten Walze (2) durch jeweilige Seitenflächen (4) zum Vorschieben des kontinuierlichen länglichen Elements (900) entlang einer Vorschubrichtung (104) und gleichzeitigen Zuschneiden des kontinuierlichen länglichen Elements (900) im Wesentlichen entlang einer Mehrzahl von Schnittlinien parallel zur Vorschubrichtung (104) erfasst werden kann;
- kontinuierliches Befördern des zugeschnittenen kontinuierlichen länglichen Elements (900) mit einer Fördergeschwindigkeit zu einem Förderpunkt (A);
- Steuern einer jeweiligen Drehgeschwindigkeit der ersten (1) und der zweiten Walze (2) um eine Änderung der jeweiligen Drehgeschwindigkeit infolge einer Wirkung, die auf mindestens eine der ersten (1) und der zweiten Walze (2) durch das kontinuierliche längliche Element (900) ausgeübt wird, zu begrenzen oder zu verhindern.

15. Reifenherstellungsprozess, umfassend das Verfahren zur Beförderung eines kontinuierlichen länglichen Elements nach dem vorhergehenden Anspruch.

## Revendications

1. Dispositif d'acheminement (999) d'un élément allongé continu (900), le dispositif (999) comprenant :
- un premier rouleau (1) et un deuxième rouleau (2) agencés côte à côte et ayant des axes de rotation respectifs (101, 102) sensiblement parallèles l'un à l'autre ;
- un moteur (11) et une transmission (15) reliés mécaniquement auxdits premier (1) et deuxième (2) rouleaux pour faire tourner lesdits premier (1) et deuxième (2) rouleaux autour desdits axes de rotation respectifs (101, 102) avec une vitesse de rotation respective, de manière à limiter ou empêcher une variation de ladite vitesse de rotation respective desdits premier (1) et deuxième (2) rouleaux suite à une action exercée sur au moins l'un desdits premier (1) et deuxième (2) rouleaux non générée par ledit moteur (15),
dans lequel lesdits premier (1) et deuxième (2) rouleaux ont des surfaces latérales respectives (4) qui se développent avec une symétrie cylindrique autour de l'axe de rotation respectif (101, 102), chaque surface latérale (4) comprenant une pluralité respective de reliefs radiaux (5) à développement fermé circonférentiel agencés successivement le long d'une direction sensiblement axiale (100), et
dans lequel lesdites pluralités de reliefs (5) desdits premier (1) et deuxième (2) rouleaux s'engrènent réciproquement, où des reliefs adjacents (5) sont à proximité immédiate mutuelle le long de ladite direction sensiblement axiale (100), pour faire avancer, à travers ladite rotation desdits premier (1) et deuxième (2) rouleaux, ledit élément allongé continu (900) le long d'une direction d'avancement (104) et couper ledit élément allongé continu (900) le long d'une pluralité de lignes de coupe sensiblement parallèles à ladite direction d'avancement (104).

2. Dispositif (999) selon la revendication 1, dans lequel lesdites pluralités de reliefs (5) desdits premier (1) et deuxième (2) rouleaux s'engrènent mutuellement de sorte que, au niveau de chaque relief (5), lesdites surfaces latérales (4) desdits premier (1) et deuxième (2) rouleaux soient à une distance radiale minimale (S), et où lesdits axes de rotation (101, 102) desdits premier (1) et deuxième (2) rouleaux sont agencés à une distance mutuelle fixe (D).

3. Dispositif (999) selon l'une quelconque des revendications précédentes, dans lequel chaque relief (5) a une largeur axiale (L) constante en se déplaçant le long d'une direction radiale (103), où lesdits reliefs (5) desdites pluralités de reliefs ont des largeurs axiales respectives (L) égales les unes aux autres, où lesdits reliefs (5) ont des hauteurs radiales (H, h) maximales et/ou minimales respectives égales les unes aux autres, où lesdits reliefs (5) de chaque pluralité de reliefs sont équidistants les uns des autres le long de ladite direction sensiblement axiale (100), où une largeur axiale (L) de chaque relief (5) est égale à une distance axiale (d) entre des reliefs subséquents le long de la succession respective, où lesdits premier (1) et deuxième (2) rouleaux ont une même extension axiale, et où chaque pluralité de reliefs (5) est, de préférence également, répartie le long d'une extension axiale entière du rouleau respectif.

4. Dispositif (999) selon l'une quelconque des revendications précédentes, dans lequel chaque relief (5) comprend deux parties d'arêtes vives respectives (6) agencées en position d'extrémité radiale et axiale, où, pour chaque relief (5), un angle (7) formé entre une face d'extrémité radiale (9) du relief et une paroi d'extrémité axiale respective (10) du relief est supérieur ou égal à 25°, et/ou inférieur ou égal à 65°.

5. Dispositif (999) selon l'une quelconque des revendications précédentes, dans lequel ledit moteur (11) comprend un bloc moteur unique (13) ayant un arbre de moteur unique (14), où ladite transmission (15) est interposée entre, pour relier mécaniquement, ledit moteur (11) et lesdits premier (1) et deuxième (2) rouleaux, où ladite transmission (15) comprend une partie de transmission (16) interposée mécaniquement entre ledit bloc moteur unique (13) et lesdits premier (1) et deuxième (2) rouleaux et comprenant un arbre d'entrée (17), relié mécaniquement, de préférence de manière rigide, à l'arbre de moteur unique (14) dudit bloc moteur unique (13) pour tourner, de préférence d'un seul tenant, avec l'arbre de moteur unique dudit moteur unique, et un arbre de sortie (18) relié mécaniquement auxdits premier (1) et deuxième (2) rouleaux pour faire tourner lesdits premier (1) et deuxième (2) rouleaux.

6. Dispositif (999) selon la revendication 5, dans lequel ladite partie de transmission (16) comprend un accouplement mécanique entre ledit arbre d'entrée (17) et ledit arbre de sortie (18) pour transmettre une rotation dudit arbre d'entrée (17) audit arbre de sortie (18) de manière à limiter ou empêcher une rotation dudit arbre de sortie (18) non transmise par ledit arbre d'entrée (17), où ledit accouplement mécanique comprend un accouplement à denture du type roue dentée à vis sans fin allant dudit arbre d'entrée (17) audit arbre de sortie (18), où ladite transmission (15) est dépourvue d'éléments d'embrayage, et où ladite partie de transmission (16) comprend une boîte d'engrenages respective.

7. Dispositif (999) selon l'une quelconque des revendications précédentes, dans lequel lesdites rotations desdits premier (1) et deuxième (2) rouleaux sont telles que des vitesses linéaires desdites surfaces latérales respectives (4) des premier et deuxième rouleaux, au niveau d'une extrémité radiale des reliefs (5), sont sensiblement égales l'une à l'autre, où ledit dispositif d'acheminement (999) comprend, pour chacun desdits premier (1) et deuxième (2) rouleaux, un groupe de paliers (76) agencés au niveau d'une première extrémité longitudinale du rouleau respectif et/ou au niveau d'une deuxième extrémité longitudinale du rouleau respectif opposée à ladite première extrémité longitudinale.

8. Dispositif (999) selon l'une quelconque des revendications précédentes, comprenant un corps de base (21) qui se développe respectivement le long d'une direction longitudinale (201), d'une direction transversale (202) et d'une hauteur (203), où ledit corps de base (21) comprend des premier (22) et deuxième (23) sièges qui reçoivent au moins partiellement respectivement lesdits premier (1) et deuxième (2) rouleaux, où ledit corps de base (21) comprend une ouverture traversante (24) ayant une embouchure d'entrée (25) et une embouchure de sortie (26) agencées sur des côtés opposés dudit corps de base (21) le long de ladite hauteur (203), où ladite ouverture traversante (24) est interposée entre lesdits premier (22) et deuxième (23) sièges, les premier (22) et deuxième (23) sièges communiquant avec, et étant de préférence contigus à, ladite ouverture traversante (24), où lesdits premier (1) et deuxième (2) rouleaux obstruent au moins partiellement ladite ouverture traversante (24).

9. Appareil d'acheminement (99) d'un élément allongé continu (900) comprenant un système d'avancement (91) pour faire avancer ledit élément allongé continu le long d'une première voie (110) avec une direction d'avancement (104), ledit système d'avancement (91) comprenant le dispositif d'acheminement (999) selon l'une quelconque des revendications 1 à 8 placé au niveau d'une sortie de la première voie (110) pour acheminer en continu avec une vitesse d'acheminement ledit élément allongé continu vers un point d'acheminement (A) correspondant à ladite sortie de ladite première voie (110), où l'appareil d'acheminement (99) comprend un système de mesure (92) pour mesurer en continu sur ledit élément allongé continu une quantité appropriée pour évaluer un débit réel dudit élément allongé continu acheminé en continu vers ledit point d'acheminement (A), où l'appareil d'acheminement (99) comprend une unité d'instruction et de commande (93) reliée audit système d'avancement (91) et audit système de mesure (92) et programmée pour donner des instructions en continu audit système d'avancement (91) pour ajuster en continu ladite vitesse d'acheminement en fonction de ladite quantité mesurée et d'une valeur de référence de débit d'acheminement dudit élément allongé continu dans ledit point d'acheminement (A).

10. Appareil (99) selon la revendication 9, dans lequel ladite quantité comprend des informations géométriques suffisantes pour calculer, au moins de manière approximative, une valeur représentative d'une extension surfacique d'une section dudit élément allongé continu (900) sur un plan sensiblement perpendiculaire à ladite direction d'avancement (104), et où ledit système de mesure (92) comprend un dispositif de détection optique (94) pour détecter en continu dans un point de détection (R) le long de ladite première voie (110) lesdites informations géométriques.

11. Appareil (99) selon la revendication 10, dans lequel lesdites informations géométriques comprennent un profil altimétrique d'au moins une partie d'un contour de ladite section par rapport à une hauteur de référence, et où ledit dispositif de détection optique (94) comprend une caméra matricielle, ayant un axe optique (300), et une source laser linéaire, capable d'émettre un faisceau laser linéaire (301) ayant un axe de propagation

12. Appareil (99) selon l'une quelconque des revendications 9 à 11, dans lequel ladite unité d'instruction et de commande (93) est programmée pour calculer en continu une valeur représentative d'une extension surfacique de ladite section en fonction desdites informations géométriques, et pour calculer en continu une valeur théorique de la vitesse d'acheminement en fonction d'un rapport entre ladite valeur de référence de débit d'acheminement et ladite valeur représentative de l'extension surfacique de la section, où l'ajustement en continu de ladite vitesse d'acheminement comprend le réglage de ladite vitesse d'acheminement de manière à être égale à ladite valeur théorique, où donner des instructions en continu audit système d'avancement (91) pour ajuster en continu ladite vitesse d'acheminement comprend le fait de donner des instructions en continu audit dispositif d'acheminement (999), et où ladite unité d'instruction et de commande (93) est programmée pour calculer un délai passé par ladite section pour aller dudit point de détection audit point d'acheminement, et pour donner des instructions en continu audit système d'avancement (91) pour ajuster en continu ladite vitesse d'acheminement également en fonction dudit délai.

13. Installation (90) comprenant le dispositif d'acheminement (999) selon l'une quelconque des revendications 1 à 8 et une machinerie de traitement continu (80) comprenant une vis d'acheminement (81) ayant un axe de rotation respectif (105), où ledit dispositif d'acheminement (999) est placé à proximité de ladite vis d'acheminement (81) et où ladite machinerie de traitement continu (80) est l'un de ce qui suit : une extrudeuse planétaire, un mélangeur à double vis, une extrudeuse annulaire, une extrudeuse monovis, une extrudeuse à double vis, une extrudeuse chargeuse pour calandres de gommage des tissus, une extrudeuse pour produits semi-finis.

14. Procédé d'acheminement d'un élément allongé continu (900), le procédé comprenant le fait :
- de fournir un premier rouleau (1) et un deuxième rouleau (2) agencés côte à côte et ayant des axes de rotation respectifs (101, 102) agencés sensiblement parallèlement l'un à l'autre, où lesdits premier (1) et deuxième (2) rouleaux ont des surfaces latérales respectives (4) qui se développent avec une symétrie cylindrique autour de l'axe de rotation respectif (101,102), chaque surface latérale comprenant une pluralité respective de reliefs radiaux (5) à développement fermé circonférentiel agencés successivement le long d'une direction sensiblement axiale (100), où lesdites pluralités de reliefs (5) desdits premier (1) et deuxième (2) rouleaux s'engrènent réciproquement, où des reliefs adjacents (5) sont à proximité immédiate mutuelle le long de ladite direction sensiblement axiale (100) ;
- de faire tourner lesdits premier (1) et deuxième (2) rouleaux,
- avec lesdits premier (1) et deuxième (2) rouleaux en rotation, d'agencer ledit élément allongé continu (900) de manière à pouvoir être capturé par lesdits premier (1) et deuxième (2) rouleaux par lesdites surfaces latérales respectives (4) pour faire avancer ledit élément allongé continu (900) le long d'une direction d'avancement (104) et pour couper en même temps ledit élément allongé continu (900) sensiblement le long d'une pluralité de lignes de coupe parallèles à ladite direction d'avancement (104) ;
- d'acheminer en continu ledit élément allongé continu coupé (900) vers un point d'acheminement (A) avec une vitesse d'acheminement ;
- de commander une vitesse de rotation respective desdits premier (1) et deuxième (2) rouleaux de manière à limiter ou empêcher une variation de ladite vitesse de rotation respective due à une action exercée sur au moins l'un desdits premier (1) et deuxième (2) rouleaux par ledit élément allongé continu (900).

15. Processus de production de pneu comprenant le procédé d'acheminement d'un élément allongé continu selon la revendication précédente.
